# EUROPEAN PATENT APPLICATION

(11) **EP 3 992 866 A2**
(43) Date of publication of application: **04.05.2022**
(21) Application number: 22151579.4
(22) Date of filing: 14.01.2022
(51) Int. Cl.: G06N 3/10

(54) **METHOD AND APPARATUS FOR ANNOTATING DATA**

(30) Priority: 30.06.2021 CN 202110737954
(71) Applicant: BEIJING BAIDU NETCOM SCIENCE AND TECHNOLOGY CO. LTD., 100085 Beijing (CN)
(72) Inventor: YANG, Xue, BEIJING, 100085 (CN)
(74) Representative: Richly & Ritschel Patentanwälte PartG mbB

(57) **Abstract**

Embodiments of the present disclosure provides a method and apparatus for annotating data, which relates to the technical fields of artificial intelligence including data labeling and deep learning. A specific implementation of the method includes: acquiring, in response to acquiring a to-be-annotated object in target data, attribute values of a plurality of attributes labeling the to-be-annotated object; summarizing, according to preset annotating requirement attributes, attribute values of at least two of the plurality of attributes of the to-be-annotated object to obtain a summarization result; and determining, according to summarization results of to-be-annotated objects in the target data, a annotation result of the target data. The method provided by embodiments of the present disclosure determines the to-be-annotated objects and the attribute values in a serial way, thereby decomposing the labeling flow and simplifying the labeling flow.

## Description

### TECHNICAL FIELD

The present disclosure relates to the field of computer technology, particularly to the technical fields of data annotating and deep learning, and in particular to a method and apparatus for annotating data.

### BACKGROUND

Data annotating can provide basic training data for artificial intelligence algorithm training. Documents of annotating rules usually have tens or even hundreds of pages. It is a great challenge to one's ability to complete such complete works at the same time.

For annotating requirements with complex annotating rules, every time a new annotating project is started, specifical annotating trainers are required for training stuffs, and the stuffs need to be trained for 2-3 weeks before they can enter the project to start the annotating.

### SUMMARY

Embodiments of the present disclosure provide a method and apparatus for annotating data.

In a first aspect, some embodiments of the present disclosure provide a method for annotating data, which includes: acquiring, in response to acquiring a to-be-annotated object in target data, attribute values annotated for a plurality of attributes of the to-be-annotated object; summarizing, according to preset annotating requirement attributes, attribute values of at least two of the plurality of attributes of the to-be-annotated object to obtain a summarization result of the to-be-annotated object; and determining, according to summarization results of to-be-annotated objects in the target data, an annotation result of the target data.

In a second aspect, some embodiments of the present disclosure provide an apparatus for annotating data, which includes: an acquisition unit, configured to acquire, in response to acquiring a to-be-annotated object in target data, attribute values annotated for a plurality of attributes of the to-be-annotated object; a summarization unit, configured to summarize, according to preset annotating requirement attributes, attribute values of at least two of the plurality of attributes of the to-be-annotated object to obtain a summarization result of the to-be-annotated object; and a determination unit, configured to determine, according to summarization results of to-be-annotated objects in the target data, an annotation result of the target data.

In a third aspect, some embodiments of the present disclosure provide an electronic device, which includes: one or more processors; and a storage apparatus for storing one or more programs, where the one or more programs, when executed by one or more processors, cause the one or more processors to implement the method as in any one of the embodiments of the method for annotating data.

In a fourth aspect, some embodiments of the present disclosure provide a computer readable storage medium storing a computer program, where the program, when executed by a processor, cause the processor to implement the method according to any one of the embodiments of the method for annotating data.

In a fifth aspect, some embodiments of the present disclosure provide a computer program product including a computer program, where the computer program, when executed by a processor, cause the processor to implement the method according to any one of the embodiments of the method for annotating data.

### BRIEF DESCRIPTION OF THE DRAWINGS

By reading the detailed description of non-limiting embodiments with reference to the following accompanying drawings, other features, objects and advantages of the present disclosure will become more apparent.
Fig. 1 is an example system architecture diagram to which some embodiments of the present disclosure may be applied;
Fig. 2A is a flowchart of a method for annotating data according to an embodiment of the present disclosure;
Fig. 2B is a summarization result of a method for annotating data according to an embodiment of the present disclosure;
Fig. 3 is a schematic diagram of an application scenario of the method for annotating data according to an embodiment of the present disclosure;
Fig. 4 is a flowchart of a method for annotating data according to another embodiment of the present disclosure;
Fig. 5 is a schematic structural diagram of an apparatus for annotating data according to an embodiment of the present disclosure; and
Fig. 6 is a schematic structural diagram of a computer system of an electronic device adapted to implement embodiments of the present disclosure.

### DETAILED DESCRIPTION OF EMBODIMENTS

Embodiments of the present disclosure is further described in detail below in combination with the accompanying drawings. It should be understood that embodiments described herein are merely illustrative of the related invention and are not restrictive of the invention. It should also be noted that, for ease of description, only parts related to the invention are shown in the accompanying drawings.

In the technical solutions of the present disclosure, the acquisition, storage and application of the user personal information are all in accordance with the provisions of the relevant laws and regulations, necessary security measures are taken, and the public order and customs are not violated.

It should be noted that embodiments in the present disclosure and the features in the embodiments may be combined with each other on a non-conflict basis. Embodiments of the present disclosure will be described below in detail with reference to the accompanying drawings.

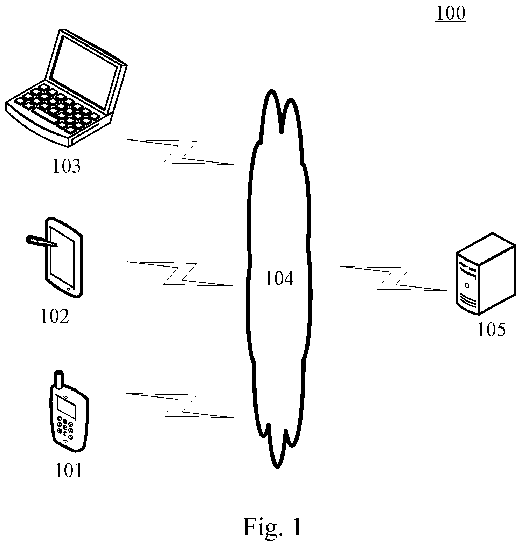

Fig. 1 shows an example system architecture 100 to which a method for annotating data or an apparatus for annotating data according to an embodiment of the present disclosure may be applied.

As shown in Fig. 1, the system architecture 100 may include terminal device(s) 101, 102, and/or 103, a network 104 and a server 105. The network 104 serves as a medium for providing a communication link between the terminal device(s) 101, 102, 103 and the server 105. The network 104 may include various types of connections, such as wired or wireless communication links, or optical fiber cables.

A user may use the terminal device(s) 101, 102, and/or103 to interact with the server 105 through the network 104 to receive or send messages. Various communication client applications, such as data annotating applications, video applications, live broadcast applications, instant messaging tools, email clients and social platform software, may be installed on the terminal device(s) 101, 102, and/or 103.

The terminal devices 101, 102, 103 may be hardware or software. When the terminal devices 101, 102, 103 are hardware, the terminal devices 101, 102, 103 may be various electronic devices having a display screen, including but not limited to, a smart phone, a tablet computer, an electronic book reader, a laptop portable computer and/or a desktop computer; and when the terminal devices 101, 102, 103 are software, the terminal devices 101, 102, 103 may be installed in the electronic devices, and may be implemented as multiple software pieces or software modules (such as multiple software pieces or software modules for providing distributed services), or as a single software piece or software module, which is not specifically limited herein.

The server 105 may be a server providing various services, such as a background server providing support for the terminal device(s) 101, 102, and/or 103. The background server may perform processing (such as analysis) on received target data, and feed back a processing result (such as a annotation result of the target data) to the terminal device(s).

It should be noted that the method for annotating data provided by embodiments of the present disclosure may be executed by the server 105 or the terminal device(s) 101, 102, and/or 103. Correspondingly, the apparatus for annotating data may be provided in the server 105 or the terminal device(s) 101, 102, and/or 103.

It should be appreciated that the number of the terminal devices, the network, the server in Fig. 1 is merely illustrative. Any number of terminal devices, networks, and servers may be provided according to actual requirements.

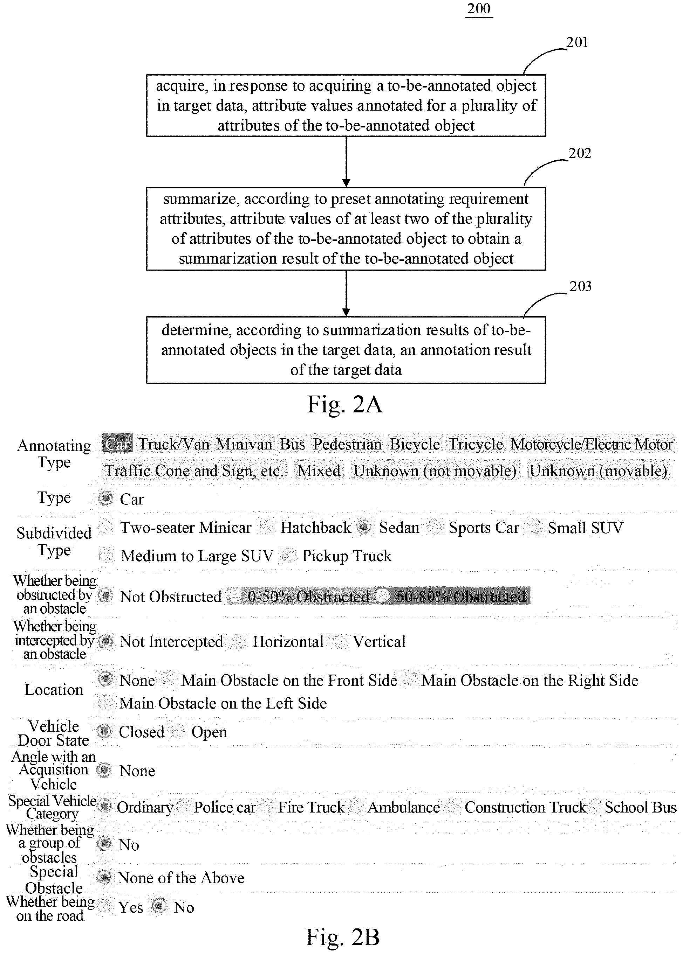

Further referring to Fig. 2A, a flow 200 of a method for annotating data according to an embodiment of the present disclosure. The method for annotating data includes the following steps:

Step 201: in response to acquiring a to-be-annotated object in target data, acquiring attribute values annotated for a plurality of attributes of the to-be-annotated object.

In this embodiment, an execution body of the method for annotating data (such as the server or the terminal devices shown in Fig. 1) may acquire, in response to acquiring a to-be-annotated object in the target data, attribute values determined for the to-be-annotated object. The attribute values are respective attribute values of the plurality of attributes of the to-be-annotated object.

The to-be-annotated object is obtained by that the execution body or other electronic device labels the target data. For example, if the target data is an image, the to-be-annotated object may be an object included in the image, and being labeled by a rectangular enclosing box. If the target data is a voice, the to-be-annotated object may be a voice segment obtained by segmenting the voice. If the target data is a video, the to-be-annotated object may be a video segment obtained by segmenting the video. If the target data is a text, the to-be-annotated object may be a word segmentation result obtained by segmenting the text.

If the target data is an image, attribute of a to-be-annotated object in the image may include at least one of: whether being obstructed by an obstacle, whether being intercepted by an obstacle, vehicle door state, whether there is an angle between the object and an acquisition vehicle, or the like. If the target data is a voice, the attribute of a to-be-annotated object in the voice may include at least one of: whether the voice is clear, a male voice or a female voice, or whether there is overlapped voice.

Step 202: summarizing, according to preset annotating requirement attributes, attribute values of at least two of the plurality of attributes of the to-be-annotated object to obtain a summarization result.

In this embodiment, the execution body may summarize or merge, according to preset annotating requirement attributes, the attribute values of the at least two of the plurality of attributes of the to-be-annotated object to obtain the summarization result of the to-be-annotated object. After the summarization, the respective attribute values of the at least two attributes of the same object may be displayed on the same page at the same time, and what is also displayed at the same time may include the at least two attributes. In the case where the target data includes at least two to-be-annotated objects, the summarization is performed for each to-be-annotated object in the to-be-annotated objects in the target data.

The annotating requirement attributes are attributes that meet annotating demands, that is, attributes of the to-be-annotated object whose attribute values need to be obtained for annotating the to-be-annotated object. The execution body may perform the summarization in various ways according to the preset annotating requirement attributes. For example, the annotating requirement attributes are used as at least two attributes, and the summarization is performed on attribute values of the label requirement attributes among the plurality of attributes.

Step 203: determining, according to summarization results of to-be-annotated objects in the target data, an annotation result of the target data.

In this embodiment, the execution body may determine, according to the summarization results of the to-be-annotated objects in the target data, the annotation result of the target data in various ways. For example, the execution body may directly determine the summarization result of each to-be-annotated object in the target data as the annotation result of the target data. Alternatively, the execution body may perform a further summarization on the summarization results of respective to-be-annotated objects in the target data, and use a result of the further summarization as the annotation result of the target data. The Further summarization may take various forms, for example, may refer to placing attribute values of different to-be-annotated objects in the target data under different tabs on a same page. In addition, the further summarization may alternatively refer to placing the attribute values of different to-be-annotated objects in the target data on a same image frame on a page or on the target data which is an image, for simultaneous display.

As shown in Fig. 2B, the figure shows a summarization result obtained for a vehicle (i.e., a to-be-annotated object) in an image. "Type, Subdivided type and the like" listed on the left column of the figure are all attributes, and those on the right of the attributes are options of attribute values.

The method provided by embodiments of the present disclosure determines the to-be-annotated objects and the attribute values in a serial way, that is, after the to-be-annotated objects in the target data are acquired, the flow of acquiring the attribute values is triggered, so that the annotating flow is decomposed and the annotating flow is simplified. Moreover, embodiments of the present disclosure summarize the attribute values according to the annotating requirement attributes, so that the annotation result can be more in line with the labeling requirements.

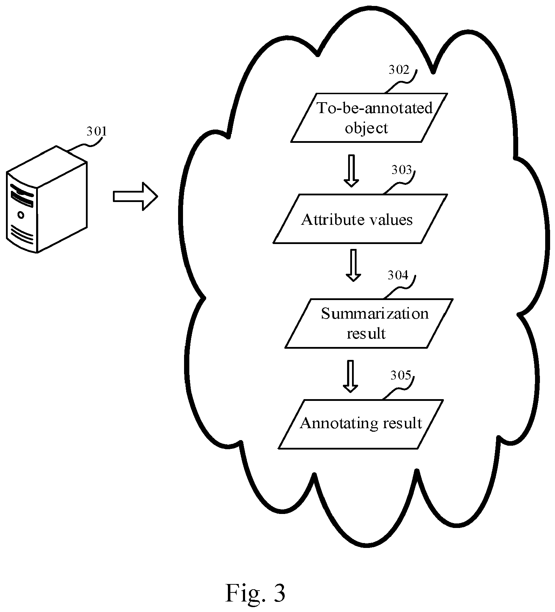

Further referring to Fig. 3, Fig. 3 is a schematic diagram of an application scenario of the method for annotating data according to an embodiment of the present disclosure. In the application scenario of Fig. 3, in response to acquiring a to-be-annotated object 302 "a vehicle" in target data "a road image", the execution body 301 may acquire attribute values 303 "not obstructed", "not intercepted" and "closed" annotated for a plurality of attributes "whether being obstructed by an obstacle", "whether being intercepted by an obstacle" and "a vehicle door state" of the to-be-annotated object 302. The execution body 301 summarizes, according to preset annotating requirement attributes "whether an obstacle is obstructed, and whether an obstacle is intercepted", attribute values 303 of at least two of the plurality of attributes "whether being obstructed by an obstacle", "whether being intercepted by an obstacle" and "a vehicle door state" of the to-be-annotated object 302 to obtain a summarization result 304. The execution body 301 determines, according to summarization results of to-be-annotated objects in the target data, an annotation result 305 of the target data.

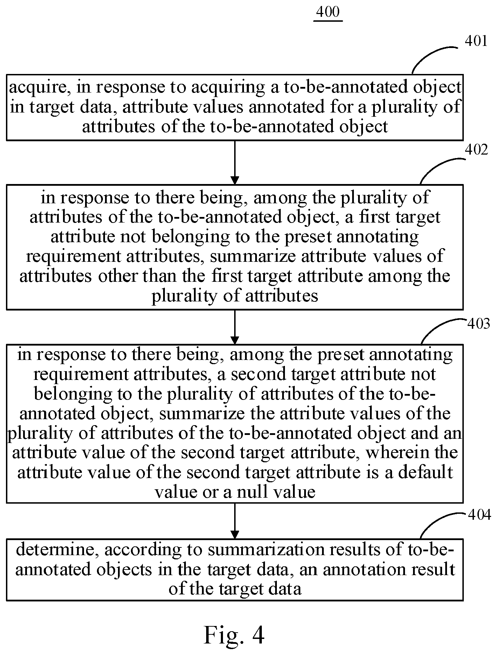

Further referring to Fig. 4, Fig. 4 is a flow 400 of a method for annotating data according to another embodiment. The flow 400 of the method for annotating data includes the following steps:

Step 401: acquiring, in response to acquiring a to-be-annotated object in target data, attribute values annotated for a plurality of attributes of the to-be-annotated object.

Step 402: summarizing, in response to there being a first target attribute not belonging to the preset annotating requirement attributes among the plurality of attributes of the to-be-annotated object, attribute values of attributes other than the first target attribute among the plurality of attributes of the to-be-annotated object.

In this embodiment, in the case where there is, among the plurality of attributes of the to-be-annotated object, an attribute that does not belong to the annotating requirement attributes, the execution body may use the attribute that does not belong to the annotating requirement attributes as the first target attribute. Moreover, in the process of the summarization, the execution body only uses the attributes other than the first target attribute in the plurality of attributes as the above at least two attributes, and summarizes the attribute values of the at least two attributes. That is, the first target attribute among the plurality of attributes does not participate in the process of the summarization.

Step 403: summarizing, in response to there being a second target attribute not belonging to the plurality of attributes of the to-be-annotated object among the preset annotating requirement attributes, the attribute values of the plurality of attributes and an attribute value of the second target attribute, where the attribute value of the second target attribute is a default value or a null value.

In this embodiment, in the case where there is, among the preset annotating requirement attributes, an attribute that does not belong to the plurality of attributes of the to-be-annotated object, the execution body may not only summarize the attribute values of the at least two of the plurality of attributes (the attributes other the first target attribute), but also use the attribute that does not belong to the plurality of attributes of the to-be-annotated object as the second target attribute and make the second target attribute participate in the summarization.

Since the second target attribute existing in the annotating requirement attributes does not belong to the plurality of attributes of the to-be-annotated object, an attribute value annotated for the second target attribute are not acquired by the execution body. The execution body may adopt a default value or a null value preset for the second target attribute.

Step 404: determining, according to summarization results of to-be-annotated objects in the target data, an annotation result of the target data.

It should be noted that step 401 and step 404 are the same as or similar to step 201 and step 203, respectively, and are not described in detail herein.

In this embodiment, the annotating requirement attributes may be used as a reference for the summarization, so that the summarization results and even the annotation result are more in line with the annotating requirements.

In some alternative implementations of any of the embodiments of the present disclosure, the processes of annotating the attribute values for the plurality of attributes may be performed in parallel.

In these alternative implementations, the processes of annotating attribute values for the plurality of attributes may be executed simultaneously, i.e., in parallel. Theses implementations can improve the annotating efficiency through a method of annotating the attribute values in parallel.

In some alternative implementations of any of the embodiments of the present disclosure, the acquiring, in response to acquiring the to-be-annotated object in the target data, the attribute values annotated for the plurality of attributes of the to-be-annotated object, includes: assigning a task for labeling an object in the target data to an object labeling terminal, so that the object labeling terminal labels the to-be-annotated object in the target data; assigning, in response to receiving the to-be-annotated object returned by the object labeling terminal, tasks for annotating attribute values for the to-be-annotated object to attribute annotating terminals, so that the attribute annotating terminals execute processes of annotating attribute values for the plurality of attributes of the to-be-annotated object in parallel; and receiving the attribute values returned by the attribute annotating terminals.

In these alternative implementations, the execution body may assign the task indicating labeling the to-be-annotated object, i.e., the object labeling task, to the object labeling terminal. In this way, the object labeling terminal can label to-be-annotated object(s) in the target data, or a labeler can use the object labeling terminal to label to-be-annotated object(s) in the target data and return the labeled to-be-annotated object to the object labeling terminal. After receiving the to-be-annotated object returned by the object labeling terminal, the execution body assigns the attribute value annotating task indicating annotating attribute values for the attributes of the to-be-annotated object to respective attribute annotating terminals. In this way, the attribute annotating terminals can annotate attribute values for the attribute values at the same time, or the labelers of the attribute annotating terminals can label the attribute values at the same time. An attribute annotating task received by each attribute annotating terminal indicates annotating an attribute value for one attribute. The processes of annotating attribute values for the plurality of attributes of the to-be-annotated object may be executed in parallel. Thereafter, the execution body may receive the attribute value returned by each attribute annotating terminal.

These implementations can achieve precise assigning of the annotating tasks, and improve the annotating efficiency through a parallel annotating method.

In some alternative implementations of any of the embodiments of the present disclosure, summarizing, according to the preset annotating requirement attributes, the attribute values of the at least two of the plurality of attributes of the to-be-annotated object, may include: summarizing, in response to determining that the annotating progress is that all attribute values corresponding to the to-be-annotated objects in the target data are annotated, the attribute values corresponding to the to-be-annotated objects in real time, respectively.

In these alternative implementations, the execution body may check the annotating progress of the target data periodically or in real time, so that the attribute values of the target data are summarized in real time after it is determined that the annotation for attribute values of all attributes of all the to-be-annotated objects in the target data are completed.

These implementations can summarize the attribute values of the target data that have been annotated in priority, so that the annotating information of the target data can be summarized in real time, thereby shortening the annotating time.

In some alternative application scenarios of these implementations, the method further includes: generating a universally unique identifier for the target data, where the universally unique identifier includes at least two of: a data type of the target data, an acquisition time of the target data, a data batch number of the target data, and a data number of the target data.

In these alternative application scenarios, the execution body may generate the universally unique identifier (UUID) for the target data. Particularly, in the UUID, the data type may refers to image, text, voice, or the like. Each piece of target data may have a data number. In some scenarios, there is a case where the data numbers of two pieces of target data are identical. For example, the data number may be a sequence number of a piece of target data in a batch, and then there is the case where data numbers of two pieces of target data in two different batches are identical.

These application scenarios can generate the UUID for a piece of target data, so as to subsequently accurately determine the piece of target data according to the UUID and process the piece of target data according to the UUID.

Alternatively, checking the annotating progress of the target data may include: generating, for attribute value annotating events of the to-be-annotated objects in the target data, event progress records including the universally unique identifier; and in response to determining that the annotating progress is that the all attribute values corresponding to the to-be-annotated objects in the target data are annotated, summarizing the attribute values corresponding to the to-be-annotated objects in real time, respectively, includes: in response to determining that the attribute value annotating events indicated by the event progress records including the universally unique identifier are completed, summarizing the attribute values corresponding to the to-be-annotated objects in real time, respectively.

In these alternative implementations, each attribute of the to-be-annotated object corresponds to an attribute value annotating event, which indicates an event of annotating the attribute value. The operation of labeling the to-be-annotated objects and annotating attribute values for the to-be-annotated objects in embodiments of the present disclosure may be completed by the labeler(s), and the attribute value annotating events may include receiving the content annotated by the labeler(s).

For the target data indicated by the UUID, if among all the to-be-annotated objects in the target data, all event progress records of each to-be-annotated object indicate that the annotations are completed, the attribute values corresponding to each to-be-annotated object can be summarized in real time.

In practice, the event progress records can be expressed as UUID-attribute identifier-completion status information. The completion status information here may indicate whether the attribute value annotating for the attribute indicated by the attribute identifier has been completed.

These alternative application scenarios can accurately and comprehensively check the progresses of all annotating events of the target data through the UUID.

In some alternative implementations of any of the embodiments of the present disclosure, checking the annotating progress of the target data may include polling annotating progresses of a plurality pieces of data including the target data, where the plurality pieces of data is to-be-annotated data of same annotating batch.

In these alternative implementations, the execution body may poll pieces of data including the target data, so that the summarization may be executed in time after the annotating of each piece of data is completed, thereby improving the annotating efficiency of the entire batch of data.

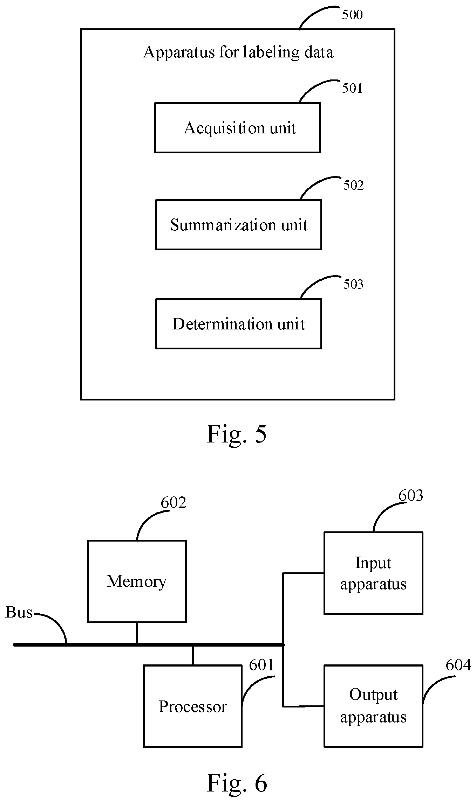

Further referring to Fig. 5, as an implementation of the method shown in each of the above figures, some embodiments of the present disclosure provide an apparatus for annotating data. The embodiment of the apparatus corresponds to the embodiment of the method shown in Fig. 2. In addition to the features described below, the embodiment of the apparatus may alternatively include the same or corresponding features or effects as the embodiment of the method shown in Fig. 2. The apparatus is particularly applicable to various electronic devices.

As shown in Fig. 5, the apparatus 500 for annotating data of this embodiment includes means for carrying out the method for annotating data. Particularly, the apparatus 500 of this embodiment includes: an acquisition unit 501, a summarization unit 502 and a determination unit 503. The acquisition unit 501 is configured to acquire, in response to acquiring a to-be-annotated object in target data, attribute values annotated for a plurality of attributes of the to-be-annotated object; the summarization unit 502 is configured to summarize, according to preset annotating requirement attributes, attribute values of at least two of the plurality of attributes of the to-be-annotated object to obtain a summarization result of the to-be-annotated object; and the determination unit 503 is configured to determine, according to summarization results of to-be-annotated objects in the target data, an annotation result of the target data.

In this embodiment, the specific processing of the acquisition unit 501, the summarization unit 502 and the determination unit 503 of the apparatus 500 for annotating data and the technical effects thereof may be described with reference to the related description of steps 201 to 203 in the embodiment corresponding to Fig. 2, and are thus not repeated herein.

In some alternative implementations of this embodiment, processes of annotating the attribute values for the plurality of attributes are parallel.

In some alternative implementations of this embodiment, the acquisition unit is further configured to execute the acquiring, in response to acquiring the to-be-annotated object in the target data, the attribute values annotated for the plurality of attributes of the to-be-annotated object, in a following way of: assigning a task for labeling an object in the target data to an object labeling terminal, so that the object labeling terminal labels the to-be-annotated object in the target data; assigning, in response to receiving the to-be-annotated object returned by the object labeling terminal, tasks for annotating attribute values for the to-be-annotated object to attribute annotating terminals, so that the attribute annotating terminals execute processes of annotating the attribute values for the plurality of attributes in parallel; and receiving the attribute values returned by the attribute annotating terminals.

In some alternative implementations of this embodiment, the summarization unit is further configured to execute summarizing, according to the preset annotating requirement attributes, the attribute values of the at least two of the plurality of attributes of the to-be-annotated object, in a following way of: in response to there being, among the plurality of attributes of the to-be-annotated object, a first target attribute not belonging to the preset annotating requirement attributes, summarizing attribute values of attributes other than the first target attribute among the plurality of attributes; and in response to there being, among the preset annotating requirement attributes, a second target attribute not belonging to the plurality of attributes of the to-be-annotated object, summarizing the attribute values of the plurality of attributes of the to-be-annotated object and an attribute value of the second target attribute, wherein the attribute value of the second target attribute is a default value or a null value.

In some alternative implementations of this embodiment, the summarization unit is further configured to execute summarizing, according to the preset annotating requirement attributes, the attribute values of the at least two of the plurality of attributes of the to-be-annotated object, in a following way of: checking an annotating progress of the target data; and in response to the annotating progress being that all attribute values corresponding to the to-be-annotated objects in the target data are annotated, summarizing the attribute values corresponding to the to-be-annotated objects in real time, respectively.

In some alternative implementations of this embodiment, the apparatus is further configured to: generate a universally unique identifier for the target data, wherein the universally unique identifier comprises at least two of a data type of the target data, an acquisition time of the target data, a data batch number of the target data, and a data number of the target data.

In some alternative implementations of this embodiment, the summarization unit is further configured to execute checking the annotating progress of the target data, in a way of: generating, for attribute value annotating events of the to-be-annotated objects in the target data, event progress records comprising the universally unique identifier; and the summarization unit is further configured to execute the in response to determining that the annotating progress is that the all attribute values corresponding to the to-be-annotated objects in the target data are annotated, summarizing the attribute values corresponding to the to-be-annotated objects in real time, respectively, in a way of: in response to determining that the attribute value annotating events indicated by the event progress records including the universally unique identifier are completed, summarizing the attribute values corresponding to the to-be-annotated objects in real time, respectively.

In some alternative implementations of this embodiment, the summarization unit is further configured to execute the checking the annotating progress of the target data, in a way of: polling annotating progresses of a plurality pieces of data comprising the target data, wherein the plurality pieces of data are pieces of to-be-annotated data of same annotating batch.

According to embodiments of the present disclosure, an electronic device, a readable storage medium and a computer program product are provided.

Fig. 6 is a block diagram of an electronic device adapted to implement the method for annotating data according to embodiments of the present disclosure. The electronic device is intended to represent various forms of digital computers, such as laptops, desktops, worktables, personal digital assistants, servers, blade servers, mainframe computers and other suitable computers. The electronic device may also represent various forms of mobile devices, such as personal digital processing, cellular phones, smart phones, wearable devices and other similar computing devices. The parts, their connections and relationships, and their functions shown herein are examples only, and are not intended to limit the implementations of the present disclosure as described and/or claimed herein.

As shown in Fig. 6, the electronic device includes one or more processors 601, a memory 602 and interfaces for connecting components, including a high-speed interface and a low-speed interface. The components are interconnected by using different buses and may be mounted on a common motherboard or otherwise as required. The processor may process instructions executed within the electronic device, including instructions stored in memory or on memory to display graphical information of the GUI on an external input or output device (such as a display device coupled to an interface). In other embodiments, multiple processors and/or multiple buses and multiple memories may be used with multiple memories, if required. Similarly, multiple electronic devices may be connected (for example, used as a server array, a set of blade servers or a multiprocessor system), and the electronic device provides some of the necessary operations. An example of a processor 601 is shown in Fig. 6.

The memory 602 is a non-transitory computer readable storage medium according to some embodiments of the present disclosure. The memory stores instructions executable by at least one processor to cause the at least one processor to execute the method for annotating data according to some embodiments of the present disclosure. The non-transitory computer readable storage medium of some embodiments of the present disclosure stores computer instructions for causing a computer to execute the method for annotating data according to some embodiments of the present disclosure.

As a non-transitory computer readable storage medium, the memory 602 may be used to store non-transitory software programs, non-transitory computer executable programs and modules, such as the program instructions or modules corresponding to the method for annotating data in some embodiments of the present disclosure (for example, the acquisition unit 501, the summarization unit 502 and the determination unit 503 shown in Fig. 5). The processor 601 runs the non-transitory software programs, instructions and modules stored in the memory 602 to execute various functional applications and data processing of the server, thereby implementing the method for annotating data in the embodiment of the method.

The memory 602 may include a storage program area and a storage data area, where the storage program area may store an operating system and an application program required by at least one function; and the storage data area may store data created by the electronic device when executing the method for annotating data. In addition, the memory 602 may include a high-speed random access memory, and may further include a non-transitory memory, such as at least one magnetic disk storage device, a flash memory or other non-transitory solid state storage devices. In some embodiments, the memory 602 may alternatively include a memory disposed remotely relative to the processor 601, which may be connected through a network to the electronic device adapted to execute the method for annotating data. Examples of such networks include, but are not limited to, the Internet, enterprise intranets, local area networks, mobile communication networks and combinations thereof.

The electronic device adapted to execute the method for annotating data may further include an input device 603 and an output device 604. The processor 601, the memory 602, the input device 603 and the output device 604 may be interconnected through a bus or other means, and an example of a connection through the bus is shown in Fig. 6.

The input device 603 may receive input digit or character information, and generate key signal input related to user settings and functional control of the electronic device adapted to execute the method for annotating data, such as a touch screen, a keypad, a mouse, a track pad, a touch pad, a pointer bar, one or more mouse buttons, a trackball or a joystick. The output device 604 may include a display device, an auxiliary lighting device (such as an LED) and a tactile feedback device (such as a vibration motor). The display device may include, but is not limited to, a liquid crystal display (LCD), a light emitting diode (LED) display and a plasma display. In some embodiments, the display device may be a touch screen.

The various embodiments of the systems and technologies described herein may be implemented in digital electronic circuit systems, integrated circuit systems, ASICs (application specific integrated circuits), computer hardware, firmware, software and/or combinations thereof. The various embodiments may include: being implemented in one or more computer programs, where the one or more computer programs may be executed and/or interpreted on a programmable system including at least one programmable processor, and the programmable processor may be a dedicated or general-purpose programmable processor, which may receive data and instructions from a memory system, at least one input device and at least one output device, and send the data and instructions to the memory system, the at least one input device and the at least one output device.

These computing programs (also known as programs, software, software applications or code) include machine instructions of a programmable processor and may be implemented in high-level procedures and/or object-oriented programming languages, and/or assembly or machine languages. As used herein, the terms "machine readable medium" and "computer readable medium" refer to any computer program product, device and/or apparatus (such as magnetic disk, optical disk, memory and programmable logic device (PLD)) for providing machine instructions and/or data to a programmable processor, including a machine readable medium that receives machine instructions as machine readable signals. The term "machine readable signal" refers to any signal used to provide machine instructions and/or data to a programmable processor.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementation of the systems and technologies described herein), or a computing system including any combination of such background component, middleware component or front-end component. The components of the system may be interconnected by any form or medium of digital data communication (such as a communication network). Examples of communication networks include a local area network (LAN), a wide area network (WAN), and the Internet.

The computer system may include a client and a server. The client and the server are typically remote from each other and typically interact through a communication network. The relationship between the client and the server is generated by a computer program running on the corresponding computer and having a client-server relationship with each other. The server may be a cloud server, also known as a cloud computing server or a cloud host, which is a host product in the cloud computing service system and may solve the defects of difficult management and weak service scalability existing in a conventional physical host and a VPS (Virtual Private Server) service. The server may alternatively be a serve of a distributed system, or a server combined with a blockchain.

The flowcharts and block diagrams in the accompanying drawings show architectures, functions and operations that may be implemented according to the systems, methods and computer program products of the various embodiments of the present disclosure. In this regard, each of the blocks in the flowcharts or block diagrams may represent a module, a program segment, or a code portion, the module, program segment, or code portion including one or more executable instructions for implementing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flowcharts as well as a combination of blocks in the block diagrams and/or flowcharts may be implemented using a dedicated hardware-based system executing specified functions or operations, or by a combination of a dedicated hardware and computer instructions.

The units or modules involved in some embodiments of the present disclosure may be implemented by means of software or hardware. The described units or modules may also be provided in a processor, for example, described as: a processor, including an acquisition unit, a summarization unit and a determination unit, where the names of these units do not in some cases constitute a limitation to such units themselves. For example, the acquisition unit may alternatively be described as "a unit of acquiring, in response to acquiring a to-be-annotated object in target data, attribute values annotated for a plurality of attributes of the to-be-annotated object".

In another aspect, some embodiments of the present disclosure further provide a computer readable storage medium. The computer readable storage medium may be a computer readable storage medium included in the apparatus described in the previous embodiments, or a stand-alone computer readable storage medium not assembled into the apparatus. The computer readable storage medium stores one or more programs. The one or more programs, when executed by the apparatus, cause the apparatus to: acquire, in response to acquiring a to-be-annotated object in target data, attribute values annotated for a plurality of attributes of the to-be-annotated object; summarize, according to preset annotating requirement attributes, attribute values of at least two of the plurality of attributes of the to-be-annotated object to obtain a summarization result of the to-be-annotated object; and determine, according to summarization results of to-be-annotated objects in the target data, an annotation result of the target data.

The above description only provides an explanation of the preferred embodiments of the present disclosure and the technical principles used. It should be appreciated by those skilled in the art that the inventive scope of the present disclosure is not limited to the technical solutions formed by the particular combinations of the above technical features. The inventive scope should also cover other technical solutions formed by any combinations of the above technical features or equivalent features thereof without departing from the concept of the present disclosure, such as technical solutions formed through the above features and technical features having similar functions provided (or not provided) in the present disclosure being replaced with each other.

## Claims

1. A method for annotating data, the method comprising:
acquiring (201, 401), in response to acquiring a to-be-annotated object in target data, attribute values annotated for a plurality of attributes of the to-be-annotated obj ect;
summarizing (202), according to preset annotating requirement attributes, attribute values of at least two of the plurality of attributes of the to-be-annotated object to obtain a summarization result of the to-be-annotated object; and
determining (203, 404), according to summarization results of to-be-annotated objects in the target data, an annotation result of the target data.

2. The method according to claim 1, wherein processes of annotating the attribute values for the plurality of attributes are parallel.

3. The method according to claim 1 or 2, wherein the acquiring (201), in response to acquiring the to-be-annotated object in the target data, the attribute values annotated for the plurality of attributes of the to-be-annotated object, comprises:
assigning a task for labeling an object in the target data to an object labeling terminal, so that the object labeling terminal labels the to-be-annotated object in the target data;
assigning, in response to receiving the to-be-annotated object returned by the object labeling terminal, tasks for annotating attribute values for the to-be-annotated object to attribute annotating terminals, so that the attribute annotating terminals execute processes of annotating the attribute values for the plurality of attributes in parallel; and
receiving the attribute values returned by the attribute annotating terminals.

4. The method according to claim 1 or 2, wherein the summarizing (202), according to the preset annotating requirement attributes, the attribute values of the at least two of the plurality of attributes of the to-be-annotated object, comprises:
in response to there being, among the plurality of attributes of the to-be-annotated object, a first target attribute not belonging to the preset annotating requirement attributes, summarizing (402) attribute values of attributes other than the first target attribute among the plurality of attributes; and
in response to there being, among the preset annotating requirement attributes, a second target attribute not belonging to the plurality of attributes of the to-be-annotated object, summarizing (403) the attribute values of the plurality of attributes of the to-be-annotated object and an attribute value of the second target attribute, wherein the attribute value of the second target attribute is a default value or a null value.

5. The method according to claim 1 or 2, wherein summarizing (202), according to the preset annotating requirement attributes, the attribute values of the at least two of the plurality of attributes of the to-be-annotated object, comprises:
checking an annotating progress of the target data; and
in response to the annotating progress being that all attribute values corresponding to the to-be-annotated objects in the target data are annotated, summarizing the attribute values corresponding to the to-be-annotated objects in real time, respectively.

6. The method according to claim 5, wherein the method further comprises:
generating a universally unique identifier for the target data, wherein the universally unique identifier comprises at least two of a data type of the target data, an acquisition time of the target data, a data batch number of the target data, and a data number of the target data.

7. The method according to claim 6, wherein the checking the annotating progress of the target data, comprises: generating, for attribute value annotating events of the to-be-annotated objects in the target data, event progress records comprising the universally unique identifier; and
the in response to the annotating progress being that all attribute values corresponding to the to-be-annotated objects in the target data are annotated, comprises:
in response to the attribute value annotating events indicated by the event progress records comprising the universally unique identifier being completed.

8. The method according to claim 5, wherein the checking the annotating progress of the target data, comprises:
polling annotating progresses of a plurality pieces of data comprising the target data, wherein the plurality pieces of data are pieces of to-be-annotated data of same annotating batch.

9. An apparatus for annotating data, the apparatus comprising means for carrying out the method according to any one of claims 1-8.

10. A computer readable storage medium storing a computer program, wherein the program, when executed by a processor, cause the processor to implement the method according to any one of claims 1 to 8.

11. A computer program product comprising a computer program, wherein the computer program, when executed by a processor, cause the processor to implement the method according to any one of claims 1 to 8.
